# EUROPEAN PATENT SPECIFICATION

(11) **EP 2 018 769 B1**
(45) Date of publication and mention of the grant of the patent: **22.06.2016**
(21) Application number: 06806550.7
(22) Date of filing: 26.10.2006
(51) Int. Cl.: H04N 21/414, H04N 21/43, H04N 21/643

(54) **PORTABLE ELECTRONIC DEVICES, METHODS AND COMPUTER PROGRAM PRODUCTS FOR UPDATING FREQUENCY SETTINGS**
TRAGBARE ELEKTRONISCHE GERÄTE, VERFAHREN UND COMPUTERPROGRAMMPRODUKTE ZUM AKTUALISIEREN VON FREQUENZEINSTELLUNGEN
DISPOSITIFS ÉLECTRONIQUES PORTABLES, PROCÉDÉS ET PRODUITS DE PROGRAMMES INFORMATIQUES POUR METTRE À JOUR LES RÉGLAGES DE FRÉQUENCE

(30) Priority: 12.05.2006 US 433815
(43) Date of publication of application: 28.01.2009
(73) Proprietor: Sony Ericsson Mobile Communications AB, 22188 Lund (SE)
(72) Inventor: JENDBRO, Magnus, 245 61 Staffanstorp (SE)
(74) Representative: Valea AB
(86) International application number: PCT/EP2006/010305
(87) International publication number: WO 2007/131541

(56) References cited:
- EP-A- 1 381 177
- US-A1- 2003 206 605
- US-A1- 2003 228 892

## Description

### FIELD OF THE INVENTION

The present invention relates to portable electronic devices and, more particularly, to portable electronic devices enabled for mobile television and related methods and computer program products.

### BACKGROUND OF THE INVENTION

Recently, there has been a proliferation of features in the field of portable communications. Portable electronic devices, such as cordless and cellular telephones, pagers, wireless modems, wireless email devices, personal digital assistants (PDAs) with communication functions, MP3 players and other portable communications devices are becoming more commonplace. Some of these portable electronic devices are equipped with the capability to view television programs.

To provide television service, portable electronic devices may use a Digital Video Broadcasting: Handhelds (DVB-H) standard, which is basically an extension of older DVB-Terrestrial(DVB-T) standard. In particular, DVB-H is a terrestrial digital TV standard that uses less power in a receiving device, for example, a portable electronic device, than DVB-T, thus, allowing the receiving device to move freely while receiving the transmission. Accordingly, DVB-H is more suitable for portable electronic devices than DVB-T and allows the portable electronic devices to receive digital TV broadcasting over, for example, the digiTV network, *i.e.,* without using mobile networks.

US 2003/0228892 discloses a portable electronic device comprising a digital video broadcast (DVB) receiver.

### SUMMARY OF THE INVENTION

Some embodiments of the present invention provide portable electronic devices including a digital video broadcast (DVB) receiver and a DVB frequency adjustment module. The DVB receiver is configured to use a reference clock of the portable electronic device as a DVB reference clock. A DVB frequency adjustment module is configured to receive adjustment information associated with the reference clock of the portable electronic device and adjust frequency settings of the DVB receiver responsive to the adjustment information.

In further embodiments of the present invention, the adjustment information may be a software signal indicating a magnitude of a frequency change of the reference clock or a hardware signal that indicates a frequency change of the reference clock. The DVB frequency adjustment module may be further configured to adjust the frequency settings of the DVB receiver based on the magnitude of the frequency change of the reference clock. In certain embodiments of the present invention, the DVB frequency adjustment module may be further configured to determine a doppler shift associated with the frequency change of the reference clock responsive to the hardware signal and adjust the frequency settings of the DVB receiver based on the magnitude of the frequency change of the reference clock.

In still further embodiments of the present invention, the adjustment information may be generated in response to a synchronization of the reference clock with a network clock. The received adjustment information may be received before or after reference clock is adjusted. In certain embodiments of the present invention, the DVB frequency adjustment module may be further configured to adjust the frequency settings of the DVB receiver within the portable electronic device.

Some embodiments of the present invention provide a method of adjusting frequency settings of a digital video broadcast receiver. Adjustment information associated with a reference clock of a portable electronic device is received. The reference clock of the portable electronic device is used as a DVB reference clock. Frequency settings of the DVB receiver are adjusted responsive to the adjustment information.

In further embodiments of the present invention, the adjustment information may include a software signal indicating a magnitude of a frequency change of the reference clock or a hardware signal that indicates a frequency change of the reference clock. The frequency settings of the DVB receiver may be adjusted based on the magnitude of the frequency change of the reference clock. In certain embodiments of the present invention, a doppler shift associated with the frequency change of the reference clock may be determined responsive to the hardware signal and the frequency settings of the DVB receiver may be adjusted based on the determined doppler shift.

In still further embodiments of the present invention, the adjustment information may be received before or after the reference clock is adjusted. The frequency settings of the DVB receiver may be adjusted within the portable electronic device.

Some embodiments of the present invention provide a computer program product for adjusting frequency settings of a digital video broadcast receiver. A computer readable medium having computer readable program code embodied therein is provided. The computer readable program medium includes computer readable program code configured to receive adjustment information associated with a reference clock of a portable electronic device. The reference clock of the portable electronic device is used as a DVB reference clock. Computer readable program code configured to adjust frequency settings of the DVB receiver responsive to the adjustment information is also provided.

In further embodiments of the present invention, the adjustment information may include a software signal indicating a magnitude of a frequency change of the reference clock or a hardware signal that indicates a frequency change of the reference clock. The computer readable program code configured to adjust may further include computer readable program code configured to adjust the frequency settings of the DVB receiver based on the magnitude of the frequency change of the reference clock. In certain embodiments of the present invention, the computer readable program code configured to adjust may further include computer readable program code configured to determine a doppler shift associated with the frequency change of the reference clock responsive to the hardware signal and adjust the frequency settings of the DVB receiver based on the determined doppler shift.

In still further embodiments of the present invention, the computer readable program code configured to receive adjustment information may further include computer readable program code configured to receive the adjustment information before or after the reference clock is adjusted. The computer readable program code configured to adjust may further include computer readable program code configured to adjust the frequency settings of the DVB receiver within the portable electronic device.

### BRIEF DESCRIPTION OF THE DRAWINGS

Figure 1 is a schematic diagram of a portable electronic device according to some embodiments of the present invention and an exemplary base station transceiver.
Figures 2 and 4 are flowcharts illustrating operations of portable electronic devices according to various embodiments of the present invention.

### DETAILED DESCRIPTION OF EMBODIMENTS OF THE INVENTION

Specific exemplary embodiments of the invention now will be described with reference to the accompanying drawings. This invention may, however, be embodied in many different forms and should not be construed as limited to the embodiments set forth herein; rather, these embodiments are provided so that this disclosure will be thorough and complete, and will fully convey the scope of the invention to those skilled in the art. The terminology used in the detailed description of the particular exemplary embodiments illustrated in the accompanying drawings is not intended to be limiting of the invention. In the drawings, like numbers refer to like elements.

As used herein, the singular forms "a", "an" and "the" are intended to include the plural forms as well, unless expressly stated otherwise. It will be further understood that the terms "includes," "comprises," "including" and/or "comprising," when used in this specification, specify the presence of stated features, integers, steps, operations, elements, and/or components, but do not preclude the presence or addition of one or more other features, integers, steps, operations, elements, components, and/or groups thereof. It will be understood that when an element is referred to as being "connected" or "coupled" to another element, it can be directly connected or coupled to the other element or intervening elements may be present. Furthermore, "connected" or "coupled" as used herein may include wirelessly connected or coupled. As used herein, the term "and/or" includes any and all combinations of one or more of the associated listed items.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, a "portable electronic device" includes both devices having only a wireless signal receiver without transmit abilities and devices having both receive and transmit hardware capable of two-way communication over a two-way communication link. Such devices may include cellular or other communications devices with or without a multi-line display; Personal Communications System (PCS) terminals that may combine a voice and data processing, facsimile and/or data communications capabilities; Personal Digital Assistants (PDA) that can include a radio frequency receiver and a pager, Internet/Intranet access, Web browser, organizer, calendar and/or a global positioning system (GPS) receiver; and/or conventional laptop and/or palmtop computers or other appliances, which include a radio frequency receiver. As used herein, a "portable electronic device" may be portable, transportable, installed in a vehicle (aeronautical, maritime, or land-based), or situated and/or configured to operate locally and/or in a distributed fashion at any other location(s) on earth and/or in space.

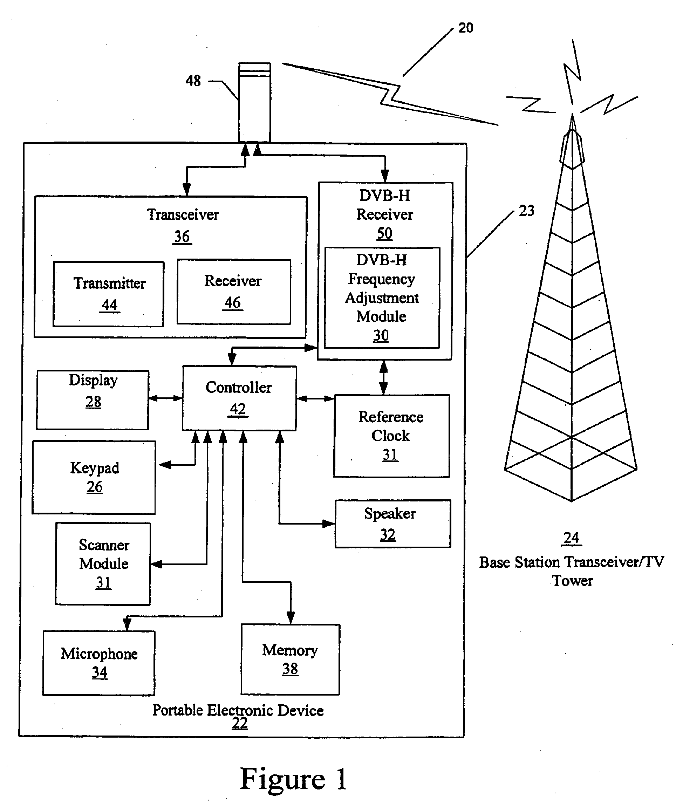

As discussed herein with respect to Figures 1 through 4, embodiments of the present invention provide portable electronic devices, methods and computer program products for adjusting frequency settings of a digital video broadcast (DVB) system. In particular, some embodiments of the present invention use a DVB-Handheld (DVB-H) standard to provide television service in a portable electronic device. The DVB-H standard is basically an extension of the older DVB-Terrestrial (DVB-T) standard. In particular, DVB-H is a terrestrial digital TV standard that uses less power in a receiving device, for example, a portable electronic device, than DVB-T, thus, allowing the receiving device to move freely while receiving the transmission. Accordingly, DVB-H is more suitable for portable electronic devices than DVB-T and allows the portable electronic devices to receive digital TV broadcasting over, for example, the digiTV network, *i.e.,* without using mobile networks.

Portable electronic devices according to some embodiments of the present invention may include a DVB-H receiver including a DVB-H receiver and transmitter. The DVB-H receiver may use a reference clock of the portable electronic device as a DVB-H reference clock. This may provide advantages over devices that provide a dedicated reference clock to the DVB-H receiver as these added components may increase the size and increase the manufacturing cost of the device. However, using the reference clock of the portable electronic device as the DVB-H reference clock may also cause problems.

In particular, the reference clock of the portable electronic device is periodically or randomly updated to be synchronized with a network clock, for example, Global System for Mobile (GSM) communication and /or Universal Mobile Telephone System (UTMS) base station clocks. From the DVB-H receiver point of view, this synchronization may look like a doppler shift, which may cause degraded signal quality. Degraded signal quality may lead to decreased picture quality as discussed further herein.

Accordingly, portable electronic devices, methods and computer program products according to some embodiments of the present invention may be configured to receive adjustment information associated with a reference clock of a portable electronic device where the reference clock of the portable electronic device is used as a DVB reference clock and adjust frequency settings of the DVB receiver responsive to the adjustment information. Thus, according to some embodiments of the present invention the DVB receiver may be fed by the reference clock of the portable electronic device without sacrificing quality of the signal due to perceived doppler shifts as will be discussed further herein with respect to Figures 1 through 4.

It will be understood that although some embodiments of the present invention are discussed herein with respect to GSM and UMTS, embodiments of the present invention are not limited to this configuration. For example, embodiments of the present invention may used to correct doppler shift problems of a DVB receiver associated with synchronization of portable electronic devices to any network clock without departing from the scope of the present invention.

Referring first to Figure 1, a schematic block diagram is provided illustrating portable electronic devices 22 including a DVB-H receiver 50 and a DVB-H frequency adjustment module 30 in accordance with some embodiments of the present invention. Figure 1 illustrates a portable electronic device 22 and a base station transceiver 24 of a wireless communications network 20. As used herein, the base station transceiver 24 may also include or be a TV tower for mobile TV according to some embodiments of the present invention. It will be understood that as wireless technologies evolve, so do "wireless communication networks." As used herein, a "wireless communication network" may refer to various radio access technologies in the traditional sense, a wireless local area network (LAN) or a wireless personal area network without departing from the teachings of the present invention. These networks may include, for example, radio access technologies, such as Code division multiple access (CDMA), Enhanced Data rates for GSM Evolution (EDGE), General Packet Radio Service (GPRS), Global System for Mobile Telecommunications (GSM), High-Speed Downlink Packet Access (HSDPA), High-Speed Uplink Packet Access (HSUPA), Universal Mobile Telecommunications System (UMTS), Wideband Code Division Multiple Access (W-CDMA) and/or WCDMA + EDGE (WEDGE) and/or Wireless Local Area Networks (WLAN), such as Wireless Fidelity (WiFi) and Worldwide Interoperability for Microwave Access (WiMAX).

According to some embodiments of the present invention, radio access technologies and/or WLANs may be used as an access media between the portable electronic device 22 and the wireless communication network 20 illustrated in Figure 1. For example, a portable electronic device 22 may also access a data network via UMTS, GSM, EDGE, GPRS, WEDGE, CDMA, WCDMA, HSDPA, HSUPA, WIFI, WiMAX and the like without departing from the scope of the present invention.

The portable electronic device 22 includes a portable housing 23 and may include, a keypad 26, a display 28, a speaker 32, a microphone 34, a transceiver 36, and a memory 38, any of which may communicate with a controller (processor) 42. Furthermore, the portable electronic device 22 also includes a DVB-H frequency adjustment module 30 and a DVB-H receiver 50 according to some embodiments of the present invention, which also communicate with the controller 42. The controller 42 can be any commercially available or custom microprocessor.

It will be understood that although the DVB-H frequency adjustment module 30 and the DVB-H receiver 50 are illustrated as one cohesive module in Figure 1, embodiments of the present invention are not limited to this configuration. For example, the DVB-H frequency adjustment module 30 and the DVB-H receiver 50 could be separate without departing from the scope of the present invention.

As further illustrated, the transceiver 36 typically includes a transmitter circuit 44 and a receiver circuit 46, which respectively transmit outgoing radio frequency signals to the base station transceiver 24 and receive incoming radio frequency signals, such as voice call and data signals, from the base station transceiver 24 via an antenna 48. The antenna 48 may be an embedded antenna, a retractable antenna or any antenna known to those having skill in the art without departing from the scope of the present invention. The radio frequency signals transmitted between the portable electronic device 22 and the base station transceiver 24 may include both traffic and control signals (e.g., paging signals/messages for incoming calls), which are used to establish and maintain a voice call communication with another party or to transmit and/or receive data, such as e-mail or Multimedia Message Service (MMS) messages, with a remote device. The controller 42 may support various functions of the portable electronic device 22, including functions related to the DVB-H frequency adjustment module 30 and the DVB-H receiver 50 of the portable electronic device 22 according to some embodiments of the present invention.

In some embodiments of the present invention, the base station transceiver 24 is a radio transceiver(s) that defines a cell in a cellular network and communicates with the portable electronic device 22 and other portable electronic devices in the cell using a radio-link protocol. Although only a single base station transceiver 24 is shown, it will be understood that many base station transceivers may be connected through, for example, a mobile switching center and other devices, to define a wireless communications network.

As illustrated in Figure 1, the DVB-H receiver 50 is configured to communicate with the base station/TV Tower 24. The DVB-H receiver 50 may use a reference clock 31 of the portable electronic device 22 as a DVB reference clock. The DVB frequency adjustment module 30, according to some embodiments of the present invention, is configured to receive adjustment information associated with the reference clock 31 of the portable electronic device 22 and adjust frequency settings of the DVB receiver 50 responsive to the adjustment information. In other words, when the portable electronic device 22 synchronizes the reference clock 31 to the network clock, the adjustment information, for example, how much the reference clock 31 changed, is provided to the DVB-H frequency adjustment module 30. The DVB-H frequency adjustment module 30 is configured to adjust the frequency settings of the DVB-H receiver so that an unwanted doppler shift does not occur in response to the reference clock synchronization.

It will be understood that although embodiments of the present invention discussed herein include the DVB-H receiver 50 being fed by the reference clock 31 of the portable electronic device, embodiments of the present invention are not limited to this configuration. Any aspect of the DVB system may be fed by the reference clock 31 without departing from the scope of the present invention.

In some embodiments of the present invention, the adjustment information may be provided to the frequency adjustment module 30 as a software signal indicating a magnitude of a frequency change of the reference clock 31. In further embodiments of the present invention, the adjustment information may be provided to the DVB-H frequency adjustment module 30 as a hardware signal that indicates a frequency change of the reference clock. The DVB frequency adjustment module 30 may then be configured to determine a doppler shift associated with the frequency change of the reference clock responsive to the hardware signal and adjust the frequency settings of the DVB receiver based on the determined magnitude of the frequency change of the reference clock. The adjustment information may be provided to the DVB-H frequency adjustment module 30 before or after the reference clock is adjusted without departing from the scope of the present invention.

Accordingly, as discussed herein, using a reference clock of the portable electronic device as a reference clock of a DVB-H receiver associated with the portable electronic device may cause problems. For example, degradation of signal quality may occur when the reference clock is updated as the clock update may be viewed as a doppler shift to the DVB-H receiver. For example, DVBM is Orthogonal Frequency Division Multiplexing (OFDM) based. OFDM, being a multi-carrier system, is sensitive to clock noise and reference clock adjustments. This could lead to degraded radio frequency (RF) performance, which in turn could cause, for example, degraded video quality. Thus, according to some embodiments of the present invention, portable electronic devices, methods and computer program products are provided that adjust the frequency settings of the DVB-H receiver responsive to a reference clock adjustment. Therefore, some embodiments of the present invention may provide improved signal quality, without providing a dedicated reference clock for the DVB-H receiver. Thus, relatively inexpensive and small devices may be provided.

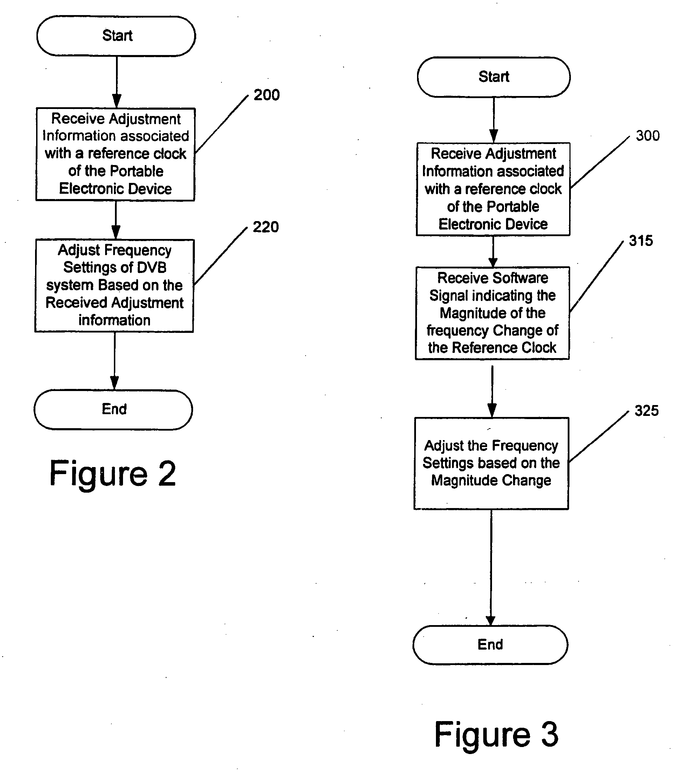

Operations of portable electronic devices according to some embodiments of the present invention will now be discussed with respect to the flowcharts of Figures 2 through 4. Operations begin at block 200 by receiving adjustment information associated with a reference clock of a portable electronic device. The reference clock of the portable electronic device may be used as a DVB reference clock. The adjustment information may be generated in response to synchronization of the reference clock to the network clock, for example, a GSM clock. This synchronization may be called for the GSM standard. The adjustment information may be provided to the DVB receiver as a software signal indicating a magnitude of a frequency change of the reference clock. In some embodiments of the present invention, the adjustment information may also be provided as a hardware signal in the portable electronic device that indicates a frequency change of the reference clock. The adjustment information may be received before or after the reference clock is adjusted. Frequency settings of the DVB receiver are adjusted responsive to the adjustment information (block 220).

Operations according to further embodiments of the present invention will now be discussed with respect to the flowchart of Figure 3. Operations begin at block 300 by receiving adjustment information associated with a reference clock of a portable electronic device. The reference clock of the portable electronic device may be used as a DVB reference clock. A software signal is received indicating a magnitude of a frequency change of the reference clock (block 315). Frequency settings of the DVB receiver are adjusted based on the magnitude of the frequency change (325).

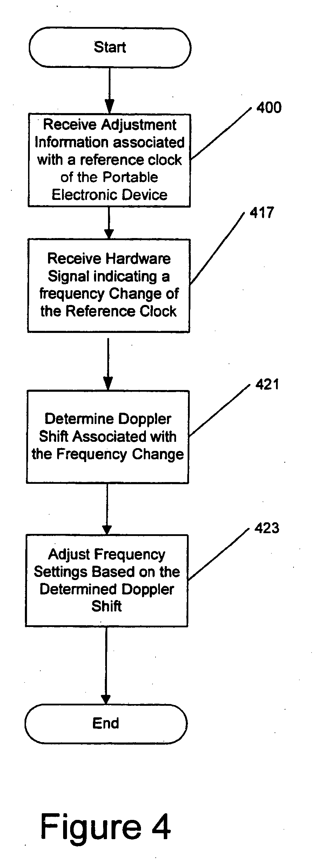

Operations according to further embodiments of the present invention will now be discussed with respect to the flowchart of Figure 4. Operations begin at block 400 by receiving adjustment information associated with a reference clock of a portable electronic device. The reference clock of the portable electronic device may be used as a DVB reference clock. A hardware signal is received indicating a frequency change of the reference clock (block 417). A doppler shift associated with the frequency change of the reference clock is determined responsive to the hardware signal (block 421). The frequency settings of the DVB receiver are adjusted based on the determined doppler shift (block 423).

As will be appreciated by one of skill in the art, the present invention may be embodied as a portable electronic device, method or computer program product. Accordingly, the present invention may take the form of an entirely hardware embodiment, a software embodiment or an embodiment combining software and hardware aspects all generally referred to herein as a "circuit" or "module." Furthermore, the present invention may take the form of a computer program product on a computer-usable storage medium having computer-usable program code embodied in the medium. Any suitable computer readable medium may be utilized including hard disks, CD-ROMs, optical storage devices, a transmission media such as those supporting the Internet or an intranet, or magnetic storage devices.

Computer program code for carrying out operations of the present invention may be written in an object oriented programming language such as Java®, Smalltalk or C++. However, the computer program code for carrying out operations of the present invention may also be written in conventional procedural programming languages, such as the "C" programming language and/or a lower level assembler language. The program code may execute entirely on the user's computer, partly on the user's computer, as a stand-alone software package, partly on the user's computer and partly on a remote computer or entirely on the remote computer. In the latter scenario, the remote computer may be connected to the user's computer through a local area network (LAN) or a wide area network (WAN), or the connection may be made to an external computer (for example, through the Internet using an Internet Service Provider).

Furthermore, the present invention was described in part above with reference to flowchart illustrations and/or block diagrams of portable electronic devices, methods, and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer-readable memory that can direct a computer or other programmable data processing apparatus to function in a particular manner, such that the instructions stored in the computer-readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

The diagrams of Figures 1 through 4 illustrate the architecture, functionality, and operations of some embodiments of portable electronic devices, methods and computer program products for map scanning and calibration using a portable electronic device. In this regard, each block may represent a module, segment, or portion of code, which comprises one or more executable instructions for implementing the specified logical function(s). It should also be noted that in other implementations, the function(s) noted in the blocks may occur out of the order noted in the figures. For example, two blocks shown in succession may, in fact, be executed substantially concurrently or the blocks may sometimes be executed in the reverse order, depending on the functionality involved.

In the drawings and specification, there have been disclosed exemplary embodiments of the invention. Although specific terms are employed, they are used in a generic and descriptive sense only and not for purposes of limitation, the scope of the invention being defined by the following claims.

## Claims

1. A portable electronic device (22), comprising
a digital video broadcast (DVB) receiver (50), **characterised by**:
using a reference clock (31) of the portable electronic device as a DVB reference clock; and
a DVB frequency adjustment module (30) configured to receive adjustment information associated with the reference clock of the portable electronic device and adjust frequency settings of the DVB receiver responsive to the adjustment information.

2. The portable electronic device (22) according to claim 1, wherein the adjustment information comprises a software signal indicating a magnitude of a frequency change of the reference clock.

3. The portable electronic device (22) according to claim 2, wherein the DVB frequency adjustment module (30) is further configured to adjust the frequency settings of the DVB receiver based on the magnitude of the frequency change of the reference clock.

4. The portable electronic device (22) according to any of the claims 1-3:
wherein the adjustment information comprises a hardware signal that indicates a frequency change of the reference clock; and
wherein the DVB frequency adjustment module (30) is further configured to determine a doppler shift associated with the frequency change of the reference clock responsive to the hardware signal and adjust the frequency settings of the DVB receiver based on the magnitude of the frequency change of the reference clock.

5. The portable electronic device (22) according to any of the claims 1-4, wherein the adjustment information is generated responsive to a synchronization of the reference clock with a network clock.

6. The portable electronic device (22) according to any of the claims 1-5, wherein the received adjustment information is received before or after the reference clock is adjusted.

7. A method of adjusting frequency settings of a digital video broadcast receiver (50), **characterised by**:
receiving adjustment information associated with a reference clock of a portable electronic device (22), the reference clock (31) of the portable electronic device being used as a DVB reference clock; and
adjusting frequency settings of the DVB receiver responsive to the adjustment information.

8. The method according to claim 7:
wherein the adjustment information comprises a software signal indicating a magnitude of a frequency change of the reference clock or a hardware signal that indicates a frequency change of the reference clock; and
wherein adjusting further comprises adjusting the frequency settings of the DVB receiver based on the magnitude of the frequency change of the reference clock.

9. The method according to any of the claims 7-8:
wherein the adjustment information comprises a software signal indicating a magnitude of a frequency change of the reference clock or a hardware signal that indicates a frequency change of the reference clock; and
wherein adjusting further comprises:
determining a doppler shift associated with the frequency change of the reference clock responsive to the hardware signal; and
adjusting the frequency settings of the DVB receiver based on the determined doppler shift.

10. The method according to any of the claims 7-9, wherein receiving adjustment information further comprises receiving the adjustment information before or after the reference clock is adjusted.

11. The method according to any of the claims 7-10, wherein adjusting further comprises adjusting the frequency settings of the DVB receiver within the portable electronic device.

12. A computer program product for adjusting frequency settings of a digital video broadcast receiver (50), **characterised by** :
a computer readable medium having computer readable program code embodied therein, the computer readable medium comprising:
computer readable program code configured to receive adjustment information associated with a reference clock of a portable electronic device (22), the reference clock (31) of the portable electronic device being used as a DVB reference clock; and
computer readable program code configured to adjust frequency settings of the DVB receiver responsive to the adjustment information.

13. The computer program product according to claim 12:
wherein the adjustment information comprises a software signal indicating a magnitude of a frequency change of the reference clock or a hardware signal that indicates a frequency change of the reference clock; and
wherein the computer readable program code configured to adjust further comprises computer readable program code configured to adjust the frequency settings of the DVB receiver based on the magnitude of the frequency change of the reference clock.

14. The computer program product according to any of the claims 12-13:
wherein the adjustment information comprises a software signal indicating a magnitude of a frequency change of the reference clock or a hardware signal that indicates a frequency change of the reference clock; and
wherein the computer readable program code configured to adjust further comprises computer readable program code configured to determine a doppler shift associated with the frequency change of the reference clock responsive to the hardware signal and adjust the frequency settings of the DVB receiver based on the determined doppler shift.

15. The computer program product according to any of the claims 12-14, wherein the computer readable program code configured to receive adjustment information further comprises computer readable program code configured to receive the adjustment information before or after the reference clock is adjusted.

## Patentansprüche

1. Tragbare elektronische Vorrichtung (22), die Folgendes umfasst:
einen digitalen Video-Rundsende (DVB, Digital Video Broadcast) -Empfänger (50), **gekennzeichnet durch**:
das Verwenden eines Referenztaktes (31) der tragbaren elektronischen Vorrichtung als einen DVB-Referenztakt; und
ein DVB-Frequenzanpassungsmodul (30), das dazu ausgestaltet ist, Anpassungsinformationen zu empfangen, die dem Referenztakt der tragbaren elektronischen Vorrichtung zugeordnet sind, und Frequenzeinstellungen des DVB-Empfängers als Reaktion auf die Anpassungsinformationen anzupassen.

2. Tragbare elektronische Vorrichtung (22) nach Anspruch 1, wobei die Anpassungsinformationen ein Softwaresignal umfassen, das eine Größenordnung einer Frequenzveränderung des Referenztaktes angibt.

3. Tragbare elektronische Vorrichtung (22) nach Anspruch 2, wobei das DVB-Frequenzanpassungsmodul (30) des Weiteren dazu ausgestaltet ist, die Frequenzeinstellungen des DVB-Empfängers auf der Basis der Größenordnung der Frequenzveränderung des Referenztaktes anzupassen.

4. Tragbare elektronische Vorrichtung (22) nach einem der Ansprüche 1 bis 3,
wobei die Anpassungsinformationen ein Hardwaresignal umfassen, das eine Frequenzveränderung des Referenztaktes angibt; und
wobei das DVB-Frequenzanpassungsmodul (30) des Weiteren dazu ausgestaltet ist, einen Dopplerversatz zu bestimmen, welcher der Frequenzveränderung des Referenztaktes als Reaktion auf das Hardwaresignal zugeordnet ist, und die Frequenzeinstellungen des DVB-Empfängers auf der Basis der Größenordnung der Frequenzveränderung des Referenztaktes anzupassen.

5. Tragbare elektronische Vorrichtung (22) nach einem der Ansprüche 1 bis 4, wobei die Anpassungsinformationen als Reaktion auf eine Synchronisation des Referenztaktes mit einem Netzwerktakt erzeugt werden.

6. Tragbare elektronische Vorrichtung (22) nach einem der Ansprüche 1 bis 5, wobei die empfangenen Anpassungsinformationen, bevor oder nachdem der Referenztakt angepasst wird, empfangen werden.

7. Verfahren zum Anpassen der Frequenzeinstellungen eines digitalen Video-Rundsende-Empfängers (50), **gekennzeichnet durch**,
das Empfangen der Anpassungsinformationen, die einem Referenztakt einer tragbaren elektronischen Vorrichtung (22) zugeordnet sind, wobei der Referenztakt (31) der tragbaren elektronischen Vorrichtung als ein DVB-Referenztakt verwendet wird; und
das Anpassen der Frequenzeinstellungen des DVB-Empfängers als Reaktion auf die Anpassungsinformationen.

8. Verfahren nach Anspruch 7,
wobei die Anpassungsinformationen ein Softwaresignal, das eine Größenordnung einer Frequenzveränderung des Referenztaktes angibt, oder ein Hardwaresignal umfassen, das eine Frequenzveränderung des Referenztaktes angibt; und
wobei das Anpassen des Weiteren das Anpassen der Frequenzeinstellungen des DVB-Empfängers auf der Basis der Größenordnung der Frequenzveränderung des Referenztaktes umfasst.

9. Verfahren nach irgendeinem der Ansprüche 7 bis 8,
wobei die Anpassungsinformationen ein Softwaresignal, das eine Größenordnung einer Frequenzveränderung des Referenztaktes angibt, oder ein Hardwaresignal umfassen, das eine Frequenzveränderung des Referenztaktes angibt; und
wobei das Anpassen des Weiteren Folgendes umfasst:
das Bestimmen eines Dopplerversatzes, welcher der Frequenzveränderung des Referenztaktes als Reaktion auf das Hardwaresignal zugeordnet ist; und
das Anpassen der Frequenzeinstellungen des DVB-Empfängers auf der Basis des bestimmten Dopplerversatzes.

10. Verfahren nach einem der Ansprüche 7 bis 9, wobei das Empfangen der Anpassungsinformationen des Weiteren das Empfangen der Anpassungsinformationen, bevor oder nachdem der Referenztakt angepasst wird, umfasst.

11. Verfahren nach einem der Ansprüche 7 bis 10, wobei das Anpassen des Weiteren das Anpassen der Frequenzeinstellungen des DVB-Empfängers innerhalb der tragbaren elektronischen Vorrichtung umfasst.

12. Computerprogrammprodukt zum Anpassen der Frequenzeinstellungen eines digitalen Video-Rundsende-Empfängers (50), **gekennzeichnet durch**:
ein computerlesbares Medium mit einem computerlesbaren Programmcode, der darin ausgeführt wird, wobei das computerlesbare Medium Folgendes umfasst:
den computerlesbaren Programmcode, der dazu ausgestaltet ist, die Anpassungsinformationen zu empfangen, die einem Referenztakt einer tragbaren elektronischen Vorrichtung (22) zugeordnet sind, wobei der Referenztakt (31) der tragbaren elektronischen Vorrichtung als ein DVB-Referenztakt verwendet wird; und
den computerlesbaren Programmcode, der dazu ausgestaltet ist, die Frequenzeinstellungen des DVB-Empfängers als Reaktion auf die Anpassungsinformationen anzupassen.

13. Computerprogrammprodukt nach Anspruch 12,
wobei die Anpassungsinformationen ein Softwaresignal, das eine Größenordnung einer Frequenzveränderung des Referenztaktes angibt, oder ein Hardwaresignal umfassen, das eine Frequenzveränderung des Referenztaktes angibt; und
wobei der computerlesbare Programmcode dazu ausgestaltet ist, des Weiteren anzupassen, den computerlesbaren Programmcode umfasst, der dazu ausgestaltet ist, die Frequenzeinstellungen des DVB-Empfängers auf der Basis der Größenordnung der Frequenzveränderung des Referenztaktes anzupassen.

14. Computerprogrammprodukt nach einem der Ansprüche 12 bis 13,
wobei die Anpassungsinformationen ein Softwaresignal, das eine Größenordnung einer Frequenzveränderung des Referenztaktes angibt, oder ein Hardwaresignal umfassen, das eine Frequenzveränderung des Referenztaktes angibt; und
wobei der computerlesbare Programmcode dazu ausgestaltet ist, des Weiteren anzupassen, den computerlesbaren Programmcode umfasst, der dazu ausgestaltet ist, einen Dopplerversatz zu bestimmen, welcher der Frequenzveränderung des Referenztaktes als Reaktion auf das Hardwaresignal zugeordnet ist, und die Frequenzeinstellungen des DVB-Empfängers auf der Basis des bestimmten Dopplerversatzes anzupassen.

15. Computerprogrammprodukt nach einem der Ansprüche 12 bis 14, wobei der computerlesbare Programmcode dazu ausgestaltet ist, Anpassungsinformationen zu empfangen, des Weiteren den computerlesbaren Programmcode umfasst, der dazu ausgestaltet ist, die Anpassungsinformationen, bevor oder nachdem der Referenztakt angepasst wird, zu empfangen.

## Revendications

1. Dispositif électronique portable (22), comprenant un récepteur (50) de diffusion vidéo numérique (DVB), **caractérisé par** le fait :
d'utiliser une horloge de référence (31) du dispositif électronique portable en tant qu'horloge de référence DVB ; et
un module d'ajustement de fréquence DVB (30) configuré pour recevoir des informations d'ajustement associées à l'horloge de référence du dispositif électronique portable et pour ajuster des réglages de fréquence du récepteur DVB en réponse aux informations d'ajustement.

2. Dispositif électronique portable (22) selon la revendication 1, dans lequel les informations d'ajustement comprennent un signal logiciel indiquant une amplitude d'un changement de fréquence de l'horloge de référence.

3. Dispositif électronique portable (22) selon la revendication 2, dans lequel le module d'ajustement de fréquence DVB (30) est en outre configuré pour ajuster les réglages de fréquence du récepteur DVB sur la base de l'amplitude du changement de fréquence de l'horloge de référence.

4. Dispositif électronique portable (22) selon l'une des revendications 1 à 3 :
dans lequel les informations d'ajustement comprennent un signal matériel qui indique un changement de fréquence de l'horloge de référence ; et
dans lequel le module d'ajustement de fréquence DVB (30) est en outre configuré pour déterminer un décalage Doppler associé au changement de fréquence de l'horloge de référence en réponse au signal matériel et pour ajuster les réglages de fréquence du récepteur DVB sur la base de l'amplitude du changement de fréquence de l'horloge de référence.

5. Dispositif électronique portatif (22) selon l'une des revendications 1 à 4,
dans lequel les informations d'ajustement sont générées en réponse à une synchronisation de l'horloge de référence avec une horloge de réseau.

6. Dispositif électronique portable (22) selon l'une des revendications 1 à 5,
dans lequel les informations d'ajustement reçues sont reçues avant ou après l'ajustement de l'horloge de référence.

7. Procédé d'ajustement de réglages de fréquence d'un récepteur (50) de diffusion vidéo numérique, **caractérisé par** le fait :
de recevoir des informations d'ajustement associées à une horloge de référence d'un dispositif électronique portable (22), l'horloge de référence (31) du dispositif électronique portable étant utilisée en tant qu'horloge de référence DVB ; et
d'ajuster des réglages de fréquence du récepteur DVB en réponse aux informations d'ajustement.

8. Procédé selon la revendication 7 :
dans lequel les informations d'ajustement comprennent un signal logiciel indiquant une amplitude d'un changement de fréquence de l'horloge de référence ou un signal matériel qui indique un changement de fréquence de l'horloge de référence ; et
dans lequel l'ajustement comprend en outre le fait d'ajuster les réglages de fréquence du récepteur DVB sur la base de l'amplitude du changement de fréquence de l'horloge de référence.

9. Procédé selon l'une quelconque des revendications 7 et 8 :
dans lequel les informations d'ajustement comprennent un signal logiciel indiquant une amplitude d'un changement de fréquence de l'horloge de référence ou un signal matériel qui indique un changement de fréquence de l'horloge de référence ; et
dans lequel l'ajustement comprend en outre le fait :
de déterminer un décalage Doppler associé au changement de fréquence de l'horloge de référence en réponse au signal matériel ; et
d'ajuster les réglages de fréquence du récepteur DVB sur la base du décalage Doppler déterminé.

10. Procédé selon l'une des revendications 7 à 9, dans lequel la réception des informations d'ajustement comprend en outre le fait de recevoir des informations d'ajustement avant ou après l'ajustement de l'horloge de référence.

11. Procédé selon l'une des revendications 7 à 10, dans lequel l'ajustement comprend en outre le fait d'ajuster les réglages de fréquence du récepteur DVB dans le dispositif électronique portable.

12. Produit de programme informatique pour ajuster des réglages de fréquence d'un récepteur (50) de diffusion vidéo numérique, **caractérisé par** :
un support lisible par ordinateur dans lequel est incorporé un code de programme lisible par ordinateur, le support lisible par ordinateur comprenant :
un code de programme lisible par ordinateur configuré pour recevoir des informations d'ajustement associées à une horloge de référence d'un dispositif électronique portable (22), l'horloge de référence (31) du dispositif électronique portable étant utilisée en tant qu'horloge de référence DVB ; et
un code de programme lisible par ordinateur configuré pour ajuster des réglages de fréquence du récepteur DVB en réponse aux informations d'ajustement.

13. Produit de programme informatique selon la revendication 12 :
dans lequel les informations d'ajustement comprennent un signal logiciel indiquant une amplitude d'un changement de fréquence de l'horloge de référence ou un signal matériel qui indique un changement de fréquence de l'horloge de référence ; et
dans lequel le code de programme lisible par ordinateur configuré pour effectuer un ajustement supplémentaire comprend un code de programme lisible par ordinateur configuré pour ajuster les réglages de fréquence du récepteur DVB sur la base de l'amplitude du changement de fréquence de l'horloge de référence.

14. Produit de programme informatique selon l'une quelconque des revendications 12 et 13 :
dans lequel les informations d'ajustement comprennent un signal logiciel indiquant une amplitude d'un changement de fréquence de l'horloge de référence ou un signal matériel qui indique un changement de fréquence de l'horloge de référence ; et
dans lequel le code de programme lisible par ordinateur configuré pour effectuer un ajustement supplémentaire comprend un code de programme lisible par ordinateur configuré pour déterminer un décalage Doppler associé au changement de fréquence de l'horloge de référence en réponse au signal matériel et pour ajuster les réglages de fréquence du récepteur DVB sur la base du décalage Doppler déterminé.

15. Produit de programme informatique selon l'une quelconque des revendications 12 à 14,
dans lequel le code de programme lisible par ordinateur configuré pour recevoir des informations d'ajustement comprend en outre un code de programme lisible par ordinateur configuré pour recevoir les informations d'ajustement avant ou après l'ajustement de l'horloge de référence.
